# DEMANDE DE BREVET EUROPEEN

(11) **EP 4 749 477 A1**
(43) Date de publication de la demande: **27.05.2026**
(21) Numéro de dépôt: 25216156.7
(22) Date de dépôt: 17.11.2025
(51) Int. Cl.: G06F 16/3329

(54) **PROCÉDÉ ET SYSTÈME DE QUESTIONS-RÉPONSES PAR INTELLIGENCE ARTIFICIELLE GÉNÉRATIVE BASÉE SUR UN GRAPHE DE CONNAISSANCES**

(30) Priorité: 20.11.2024 FR 2412710
(71) Demandeur: Orange, 92130 Issy-les-Moulineaux (FR)
(72) Inventeur: CHABOT, Yoan, 92326 CHATILLON CEDEX (FR); PY, Antoine, 92326 CHÂTILLON CEDEX (FR); HUYNH, Viet-Phi, 92326 CHATILLON CEDEX (FR)
(74) Mandataire: Plasseraud IP

(57) **Abrégé**

Il est proposé une interface utilisateur pour un système de questions-réponses, comprenant :
un module de saisie de questions en langage naturel,
un module de restitution configuré pour restituer :
une réponse générée par un moteur de questions-réponses utilisant un modèle de traitement de langage naturel,
une représentation d'entités mobilisées par le système lors de la génération de la réponse, et
une représentation d'une portion d'un graphe de connaissances comprenant les entités mobilisées et leur voisinage

## Description

### Domaine technique

La présente divulgation relève du domaine des systèmes de questions-réponses. Elle concerne plus précisément une interface utilisateur, ainsi qu'un système de questions-réponses, un procédé de fourniture et un programme d'ordinateur correspondants.

### Technique antérieure

Les systèmes de questions-réponses (Q/A) automatisés basés sur l'intelligence artificielle (IA) sont largement utilisés pour comprendre les questions des utilisateurs et générer des réponses pertinentes. Ces systèmes font couramment appel aux modèles de traitement du langage naturel (LLM) qui, bien qu'efficaces pour des réponses rapides et adaptées, présentent certaines limites. En effet, ces modèles, souvent statiques après leur entraînement, peuvent manquer d'exactitude sur des sujets récents ou spécifiques.

Pour pallier ces insuffisances, des approches telles que la génération augmentée par récupération (RAG) ont été développées. Elles permettent d'intégrer des données actualisées provenant de corpus documentaires externes. Cependant, ces approches restent limitées en termes de capacité à connecter des informations disparates et à exploiter des relations moins directes entre des concepts. L'approche GraphRAG surmonte partiellement cette limitation en utilisant des graphes de connaissances, qui permettent d'associer des entités de manière plus contextuelle et d'enrichir les réponses. Néanmoins, même ces techniques avancées peinent à offrir une interactivité satisfaisante avec les bases de données sous-jacentes.

Dans ce contexte, il existe un besoin pour une solution qui permette l'exploration, par un utilisateur d'un système de questions-réponses, de connaissances pertinentes au regard d'une question posée.

### Résumé

La présente divulgation vient améliorer la situation.

Il est proposé, selon un aspect, une interface utilisateur pour un système de questions-réponses, comprenant :
un module de saisie de questions en langage naturel,
un module de restitution configuré pour restituer :
   une réponse générée par un moteur de questions-réponses utilisant un modèle de traitement de langage naturel,
   une représentation d'entités mobilisées par le système lors de la génération de la réponse, et une représentation d'une portion d'un graphe de connaissances comprenant les entités mobilisées et leur voisinage.

Cette interface offre plusieurs avantages. Elle facilite la compréhension et la vérification des réponses grâce à la restitution de la représentation des entités mobilisées dans la génération de la réponse. Elle permet, également, grâce à la restitution de la représentation du graphe de connaissances, l'exploration de connaissances pertinentes compte tenu de la question posée.

Selon un autre aspect, il est proposé un procédé de fourniture d'une réponse à une question posée en langage naturel, le procédé étant mis en œuvre par une interface utilisateur d'un système de questions-réponses et comprenant :
une restitution d'une réponse à une question saisie en langage naturel, la réponse étant générée par un moteur de questions-réponses utilisant un modèle de traitement de langage naturel,
une restitution d'une représentation d'entités mobilisées par le système lors de la génération de la réponse, et
une restitution d'une représentation d'une portion d'un graphe de connaissances comprenant les entités mobilisées et leur voisinage.

Selon un autre aspect, il est proposé un programme d'ordinateur comprenant des instructions qui, lorsque le programme est mis en œuvre par un processeur, conduisent à mettre en œuvre le procédé tel que défini dans les présentes. Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en œuvre, indépendamment les unes des autres ou en combinaison les unes avec les autres.

Dans un exemple, le module de restitution est configuré pour restituer la réponse de manière progressive au fur et à mesure de sa génération par le moteur de questions-réponses.

En affichant progressivement la réponse, l'utilisateur peut commencer à lire et comprendre dès les premiers éléments, ce qui améliore l'expérience utilisateur en réduisant la perception de latence.

Dans un exemple, la représentation des entités mobilisées comprend des liens interactifs menant à des pages détaillant des informations associées aux entités.

Les liens permettent à l'utilisateur d'approfondir sa compréhension en accédant directement à des sources d'information supplémentaires. En outre, les utilisateurs peuvent ainsi naviguer facilement entre des informations succinctes et détaillées, ce qui améliore l'interactivité et la précision de l'exploration.

Dans un exemple, la représentation de la portion du graphe de connaissances comprend des liens interactifs menant à des pages détaillant des informations associées aux entités et à leur voisinage.

La possibilité de cliquer sur des éléments du graphe et d'accéder aux informations relatives au voisinage des entités peut permettre de faciliter une compréhension approfondie des relations et des contextes d'usage des entités.

Dans un exemple, les pages comprennent des indications de sources des informations.

La présence de sources garantit une transparence accrue, pouvant permettre de vérifier l'origine des informations, ce qui améliore la crédibilité des réponses fournies.

Dans un exemple, l'interface comprend un module d'édition des informations depuis les pages.

Cette fonctionnalité peut contribuer à la croissance dynamique et collaborative d'une base de connaissances rattachée au graphe de connaissances et à l'amélioration des réponses ultérieures fournies par le système de questions-réponses.

Dans un exemple, la représentation des entités inclut des labels descriptifs et/ou des descriptions textuelles des entités.

Les labels et descriptions textuelles permettent une identification rapide et claire des entités, ce qui peut faciliter la compréhension et peut réduire le besoin de navigation supplémentaire.

Dans un exemple, l'interface comprend un module de sélection d'un nombre de niveaux de voisinage de la portion du graphe de connaissances.

Dans un exemple, l'interface comprend un module de saisie d'un retour d'information associé aux entités mobilisées.

### Brève description des dessins

D'autres caractéristiques, détails et avantages apparaîtront à la lecture de la description détaillée ci-après, et à l'analyse des dessins annexés, sur lesquels :
**Fig. 1**

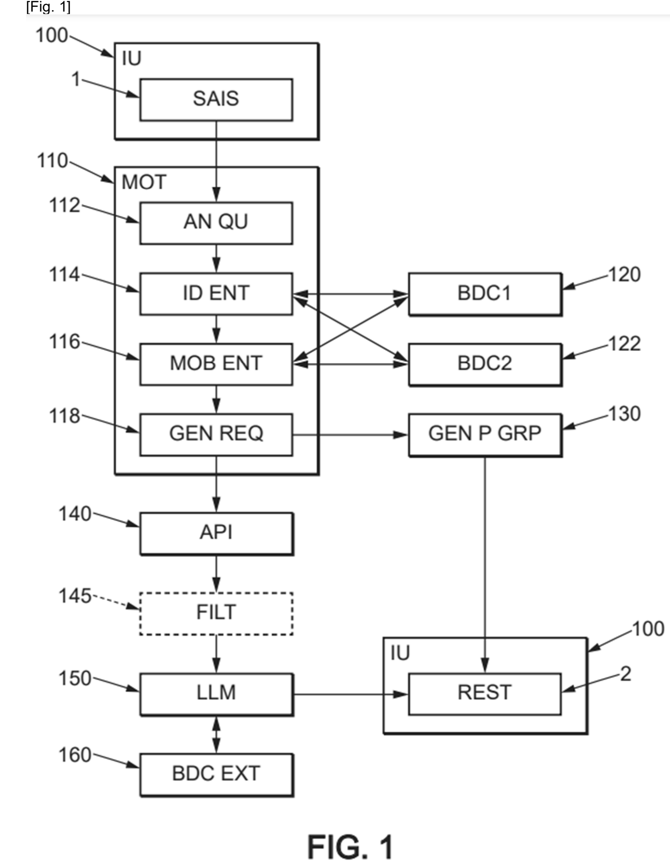

   [Fig. 1] montre, dans un exemple de réalisation, un système de questions-réponses.
**Fig. 2**

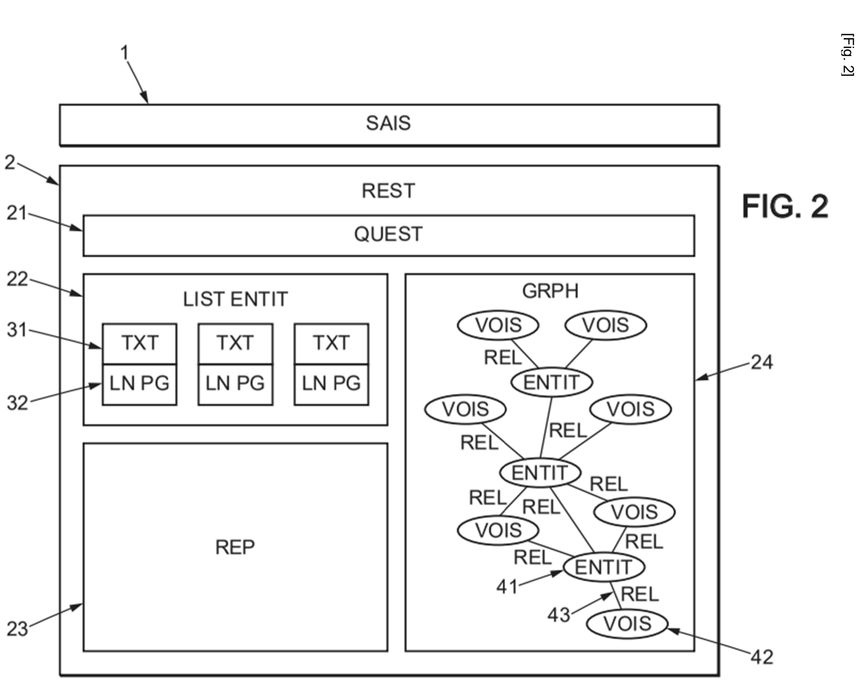

   [Fig. 2] montre, dans un exemple de réalisation, une interface utilisateur d'un tel système.
**Fig. 3**

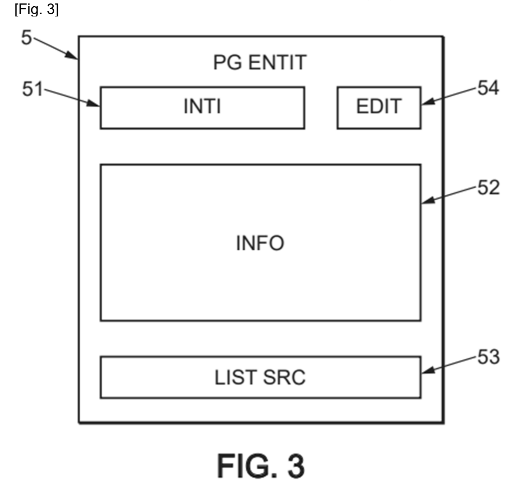

   [Fig. 3] montre, dans un exemple de réalisation, une page détaillant des informations associées à une entité représentée sur une telle interface utilisateur.

### Description des modes de réalisation

La technique proposée concerne, selon un aspect, une interface utilisateur convenant pour un système de questions-réponses. Cette interface utilisateur est conçue de manière à faciliter l'exploration par un utilisateur de connaissances pertinentes au vu d'une question posée et de manière à faciliter l'utilisation et l'enrichissement collaboratifs d'une base de connaissances recensant ces connaissances pertinentes.

Quelques termes spécifiques sont à présent clarifiés pour une meilleure compréhension de la technique proposée.

Un système de questions-réponses (Q/A) est un système informatique capable de recevoir des questions formulées par un utilisateur, de les analyser, et de générer des réponses. Ce type de système mobilise des connaissances internes ou externes pour fournir des réponses précises et pertinentes. Le système est basé sur un ou plusieurs modèles de traitement du langage naturel couplés à une ou plusieurs bases de connaissances structurées. Les questions et les réponses sont formulées en langage naturel. Une question ou une réponse en langage naturel a une formulation fluide et compréhensible pour un humain, telle qu'elle serait posée dans une conversation. Le système peut être conçu pour interpréter les questions en langage naturel et y répondre sans nécessiter de syntaxe technique ou de mot-clé spécifique, ce qui rend son utilisation accessible à un large public.

Une interface utilisateur convenant pour un tel système de questions-réponses est une plateforme interactive permettant à l'utilisateur d'interagir avec le système. Elle peut être mise en oeuvre sous forme d'application Web, mobile, ou autre, et peut inclure des éléments graphiques et vocaux pour la saisie des questions et la restitution des réponses. En fonction du contexte, l'interface peut comporter des éléments de personnalisation et des options pour ajuster la restitution des informations.

Un module de saisie de questions en langage naturel est une entité logicielle de l'interface utilisateur dont la fonction est de permettre à l'utilisateur de poser des questions en langage naturel. Il peut comprendre un champ de texte, dans lequel l'utilisateur entre directement sa question, ou un module vocal qui transcrit les questions parlées en texte via un système de reconnaissance vocale. Un tel module peut aussi inclure des options pour spécifier des paramètres, par exemple un niveau de détail attendu dans la réponse, un type de réponse souhaitée (par exemple une explication, un résumé, une recommandation, une liste, etc.), un niveau de complexité souhaité, une source de données préférée (par exemple un thème particulier, une base de données particulière), etc...

Un module de restitution est une entité logicielle de l'interface utilisateur, chargée de fournir les réponses aux questions posées à l'utilisateur. Il présente la réponse sous une forme claire et compréhensible, en langage naturel, et peut aussi afficher des informations supplémentaires.

Un moteur de questions-réponses est une entité logicielle s'appuyant sur un modèle de traitement du langage naturel, par exemple, un modèle de langage de grande taille (en anglais « large language model », LLM). Il est conçu pour interpréter les questions posées à l'aide du module de saisie, rechercher des informations pertinentes dans une ou plusieurs bases de connaissances et solliciter le modèle de langage naturel pour obtenir des réponses aux questions posées en s'appuyant sur les informations pertinentes trouvées. Le moteur de questions-réponses transmet ensuite les réponses obtenues au module de restitution.

Un modèle de traitement de langage naturel est un modèle d'apprentissage automatique capable de comprendre et de traiter des requêtes comprenant des questions en langage naturel et des informations complémentaires pour produire des réponses cohérentes. Un tel modèle, basé sur un ou plusieurs réseaux de neurones, peut par exemple être capable d'identifier des entités dans les questions, d'interpréter un contexte d'utilisation de ces entités dans les questions et/ou de générer des réponses aux questions.

Dans le contexte de la technique proposée, le système de questions-réponses (et plus particulièrement le moteur de questions-réponses) peut être mis en œuvre par une organisation disposant d'une ou plusieurs bases de connaissances internes. Une base de connaissances interne est un référentiel de données structuré et maintenu par l'organisation mettant en œuvre le système de questions-réponses. Elle contient des informations spécifiques et souvent exclusives à l'organisation, telles que des documents internes, des dossiers techniques, des rapports, des réponses à des questions fréquentes, ou des descriptions de projets. Elle peut également contenir des informations structurées sur des concepts ou des entités propres à l'organisation, par exemple des technologies, des produits, et/ou des compétences internes. Les données de cette base sont généralement mises à jour de manière régulière pour refléter les connaissances actuelles et les évolutions internes. Cette base de connaissances interne est souvent utilisée pour répondre aux questions posées par les utilisateurs en s'appuyant sur les informations spécifiques à l'organisation, ce qui la distingue d'une base de connaissances externe.

Les modèles de langage naturels couramment utilisés sont mis en œuvre par des prestataires et utilisent, dans le cadre de la génération de réponses à des questions posées, des bases de connaissances externes, pouvant être publiques ou pouvant appartenir à ces prestataires. Une base de connaissances externe est un référentiel de données public ou accessible via des sources extérieures à l'organisation propriétaire du système de questions-réponses. Elle peut inclure des informations provenant de ressources publiques, telles que des encyclopédies, des bases de données académiques, des articles de recherche, des blogs, ou encore des actualités. Les données dans une base de connaissances externe sont souvent généralistes et peuvent être utilisées pour enrichir les réponses en fournissant des informations supplémentaires qui ne sont pas spécifiquement disponibles dans la base de connaissances interne. Elle est particulièrement utile pour des informations de domaine général ou pour des connaissances actualisées qui ne font pas nécessairement partie du savoir interne de l'organisation.

Une base de connaissances, qu'elle soit interne ou externe, contient divers types d'informations organisées de manière à être facilement accessible et exploitable par le moteur de questions-réponses. Les informations peuvent être organisées en différents formats comme des tables, des ontologies, ou des schémas hiérarchiques, et peuvent inclure par exemple du texte, des images, des vidéos, des sons, etc. Une base de connaissances peut inclure des entités, qui représentent des objets, concepts ou personnes ayant une signification particulière dans un domaine donné. Par exemple, dans une entreprise de télécommunications, des entités peuvent être des technologies (ex. SD-WAN), des projets, des équipes, des produits, etc. Une base de connaissances peut inclure des relations, qui définissent les liens entre les entités. Par exemple, une relation peut indiquer qu'une technologie est utilisée dans un projet particulier, ou qu'un expert appartient à une équipe spécifique. Une base de connaissances peut inclure des attributs, qui sont des caractéristiques spécifiques des entités, telles que des descriptions textuelles, des dates importantes, des liens vers des documents ou des images. Une base de connaissances peut inclure des documents textuels associés aux entités et relations.

Un graphe de connaissances est une représentation structurée des données contenues dans une base de connaissances. Dans certaines réalisations, plutôt que de séparer des bases de connaissances internes et/ou externes, ces bases peuvent être unifiées dans un seul graphe de connaissances, hébergé par exemple de manière sécurisée sur une plateforme centralisée. Ce graphe unifié permet d'éviter le transfert de données sensibles tout en offrant une vue complète des entités et relations.

Le graphe de connaissances organise les entités et leurs relations de manière sémantique, facilitant les recherches et la compréhension contextuelle des informations. Dans un graphe de connaissances, chaque entité est représentée par un nœud. Les relations entre les entités sont représentées par des arcs reliant les nœuds. Ces relations peuvent exprimer différents types de liens, comme des liens hiérarchiques (ex. « appartient à »), fonctionnels (ex. « utilise »), temporels (ex. « créé le »), ou autres types de relations sémantiques. Le graphe de connaissances peut être organisé en différentes couches, chaque couche représentant par exemple un niveau de détail ou un degré de confidentialité différent. Le moteur de questions-réponses peut être configuré pour sélectionner la couche appropriée en fonction d'un ou plusieurs critères, par exemple le profil de l'utilisateur ou le niveau de détail souhaité dans la réponse.

Un degré de voisinage entre deux entités distinctes dans le graphe de connaissances peut être défini de la façon suivante :
deux entités A et B directement raccordées par un arc ont un degré de voisinage de 1,
deux entités A et C raccordées indirectement via une entité B par un premier arc A-B et un deuxième arc B-C ont un degré de voisinage de 2,
deux entités A et D raccordées indirectement via deux entités B et C par un premier arc A-B, un deuxième arc B-C et un troisième arc C-D ont un degré de voisinage de 3, etc.

Le graphe de connaissances permet au moteur de questions-réponses de naviguer de manière contextuelle entre les entités, en identifiant les connexions qui enrichissent la réponse à une question. Par exemple, si un utilisateur pose une question sur une technologie spécifique, le moteur peut explorer le voisinage de cette technologie dans le graphe pour inclure des informations complémentaires, telles que les projets associés, les équipes d'experts, et les ressources documentaires. Dans la plupart des interfaces graphiques, un graphe de connaissances est visualisé sous forme de nœuds et d'arcs, permettant une exploration interactive. L'utilisateur peut naviguer dans le graphe en cliquant sur les entités et en explorant leurs relations, ce qui est particulièrement utile pour des interfaces dotées d'un écran. Bien que les graphes de connaissances soient souvent visualisés sous forme graphique, d'autres représentations et modalités d'interaction sont possibles. Pour des interfaces vocales ou textuelles (comme les assistants vocaux), le graphe de connaissances peut être restitué sous une forme textuelle où les relations sont décrites verbalement ou textuellement. Par exemple, le système peut énoncer : « La technologie SD-WAN est utilisée dans les projets X et Y, et est gérée par l'équipe A. ».

Le système de questions-réponses peut intégrer un module mettant en œuvre un modèle de langage naturel propriétaire ou local. Cela permet d'utiliser le contenu d'au moins une base de données interne pour le traitement des questions tout en évitant l'envoi d'informations sensibles à un prestataire externe.

A l'inverse, dans une configuration où l'organisation propriétaire du système de questions-réponses et de la ou des bases de connaissances internes est distincte du prestataire fournissant le module mettant en œuvre le modèle de traitement de langage naturel et les bases de connaissances externes, il peut être nécessaire de limiter la transmission d'informations sensibles issues de la base de connaissances interne vers le module mettant en œuvre le modèle de traitement de langage naturel. Pour répondre à cette exigence de confidentialité, la communication entre le moteur de questions-réponses et le module mettant en œuvre le modèle de traitement de langage naturel peut être réalisée via une API (« application programming interface » en anglais, ou interface de programmation applicative). Plus précisément, le moteur de questions-réponses peut être configuré pour envoyer une requête API au module mettant en œuvre le modèle de traitement de langage naturel. Cette requête inclut la question posée par l'utilisateur, ainsi que des entités et/ou relations pertinentes issues de la base de connaissances interne. Cela permet au module mettant en œuvre le modèle de traitement de langage naturel de contextualiser la réponse en s'appuyant sur les informations pertinentes, sans nécessiter la transmission d'attributs détaillés ou de données sensibles de la base de connaissances interne au prestataire externe.

Le système de questions-réponses peut par exemple comprendre, comme illustré sur la Figure 1 :
une interface utilisateur 100 comprenant un module de saisie 1 et un module de restitution 2,
un moteur de questions-réponses 110,
au moins une base de connaissances 120, 122, et
un générateur 130 de portion de graphe de connaissances.

Le moteur de questions-réponses peut être couplé, par exemple par le biais d'une interface de programmation applicative 140, à un module 150 mettant en œuvre le modèle de langage naturel, le module 150 utilisant au moins une base de connaissances externe 160.

Un exemple de fonctionnement possible d'un tel système de questions-réponses est à présent détaillé.

L'utilisateur saisit une question en langage naturel via le module de saisie 1. Une fois la question soumise, le moteur de questions-réponses 110 traite la question en mobilisant des entités et/ou des relations pertinentes, issues de l'au moins une base de connaissances 120, 122, pour solliciter le module 150.

Le générateur 130 peut en outre générer une portion du graphe de connaissances de l'au moins une base de connaissances comprenant tout ou partie des entités mobilisées. Le graphe de connaissances peut être préalablement généré à l'échelle de la totalité de la base de données et le générateur peut être configuré pour sélectionner une portion spécifique du graphe de connaissances préalablement généré. Alternativement, la portion du graphe de connaissances peut être générée dynamiquement pour chaque question posée, en se basant uniquement sur les entités pertinentes pour la question posée.

La réponse générée par le module 150 est restituée par le module de restitution 2, avec tout ou partie des entités et/ou relations mobilisées par le moteur de questions-réponses et/ou avec la portion du graphe de connaissances générée par le générateur 130.

Un exemple d'architecture possible du moteur de questions-réponses 110 est à présent détaillé, de même qu'un exemple de fonctionnement. Dans cette configuration, l'ensemble du système de questions-réponses est sécurisé et géré par une même organisation.

Le moteur de questions-réponses peut par exemple comprendre :
un analyseur de question 112,
un module d'identification d'entités 114,
un module de mobilisation 116 d'entités, et
un générateur de requête 118.

L'analyseur de question 112 est conçu pour interpréter la question posée en identifiant des éléments pertinents, tels que des mots-clés. Par exemple, l'analyseur peut comprendre un module de traitement de langage naturel pour une interprétation sémantique de la question. Par exemple, l'analyseur de question peut comprendre un module d'analyse syntaxique afin de structurer des parties de la question en éléments syntaxiques clés. L'analyseur de question est configuré pour transmettre les éléments identifiés au module d'identification d'entités.

Dans certaines configurations, l'analyseur de question peut être conçu pour déterminer si la question posée relève d'un domaine couvert par une base de connaissances spécifiques. En fonction de cette évaluation, le traitement de la question peut être orienté de manière différenciée. Par exemple, si la question porte sur un domaine correspondant aux entités d'une base de connaissances thématique, comme les télécommunications, le traitement peut se poursuivre en mobilisant uniquement les entités pertinentes de cette base. En revanche, si la question est en dehors du champ d'une base de connaissances disponible, le système peut, dans ce cas, interroger directement un modèle de traitement de langage naturel pour générer une réponse, sans générer une quelconque liste d'entités mobilisées ni une quelconque portion de graphe de connaissances. Lorsque plusieurs bases de connaissances couvrent différents thèmes, une sélection préalable de la base la plus pertinente peut être effectuée, afin de n'exploiter que celle-ci pour l'ensemble du processus de traitement de la question posée.

Le module d'identification d'entités 114 est conçu pour repérer des entités dans une ou plusieurs bases de connaissances 120, 122. Il peut collaborer avec le module de mobilisation 116 d'entités pour élargir la recherche à des entités en relation avec celles identifiées. Dans certaines configurations, le module d'identification d'entités et l'analyseur de question peuvent être combinés en un module unique de compréhension de question, en particulier lorsque le moteur est préalablement configuré pour opérer, dans le cadre du traitement de la question posée, dans un contexte restreint avec des entités bien définies.

Le module de mobilisation 116 d'entités est configuré pour étendre des entités extraites de la base de connaissances à leur voisinage, en identifiant des entités liées à celles préalablement identifiées par le module d'identification, via des relations dans le graphe de connaissances de l'au moins une base de connaissances. Le module de mobilisation peut être omis lorsque les réponses ne nécessitent pas de contexte étendu ou lorsque les relations entre entités ne sont pas pertinentes pour la réponse. Il peut être remplacé par un module de simplification contextuelle pour se limiter aux entités les plus directement pertinentes et exclure les relations secondaires. Le module d'identification 114 et le module de mobilisation peuvent aussi être combinés en un module unique.

Le générateur de requête 118 est configuré pour générer une requête destinée au module 150. Le générateur de requête peut être combiné avec un module de formulation syntaxique pour formuler la requête selon un langage de requête spécifique ou une syntaxe prédéfinie.

La requête peut comprendre, par exemple, la question posée et une « liste d'entités mobilisées » qui est une liste comprenant au moins les entités identifiées par le module d'identification 114 et pouvant comprendre en outre les entités identifiées par le module de mobilisation 116.

La requête peut comprendre la question posée, les entités identifiées et un niveau de profondeur de voisinage des entités identifiées dans le graphe de connaissances correspondant. Cette approche permet d'omettre le module de mobilisation 116 d'entités et d'en attribuer la fonction au module 150.

La requête peut en plus de la question posée et des entités mobilisées, inclure un ou plusieurs des éléments suivants :
un ou plusieurs liens vers les pages des entités mobilisées dans la base de connaissances, correspondante,
des attributs spécifiques de chaque entité mobilisée, tels que des descriptions textuelles, des informations contextuelles, ou des métadonnées, ces attributs étant récupérés à la volée de la base de connaissances correspondante,
des relations ou liens, par exemples des liens hiérarchiques ou fonctionnels, entre les entités mobilisées, et
un résumé d'informations associées aux entités mobilisées, sous forme de métadonnées structurées, que le module 150 peut utiliser pour une interprétation plus rapide et ciblée.

La requête est fournie au module 150 de manière à ce que le module 150 utilise ou « mobilise » au moins les entités spécifiées dans la requête pour générer une réponse.

Alternativement, le module 150 peut être directement intégré au moteur de questions-réponses et peut être configuré pour interpréter la question, identifier les entités dans la ou les bases de connaissances et fournir la réponse à la question posée sans qu'il soit nécessaire de fournir au modèle de langage naturel une requête intermédiaire contenant des informations autres que le texte de la question posée elle-même.

Par ailleurs, la liste des entités mobilisées peut être fournie au générateur 130 qui est configuré pour générer une portion du graphe de connaissances comprenant, au moins, ces entités et leurs relations contextuelles.

Le module de restitution 2 recueille et restitue la réponse enrichie avec la liste des entités mobilisées et/ou avec la portion générée du graphe de connaissances.

Dans une configuration alternative, le système de questions-réponses utilise un modèle de langage naturel externe avec des exigences de confidentialité. Dans une telle configuration, il peut être prévu un module de filtrage 145 chargé d'anonymiser (par exemple de masquer), de manière réversible ou irréversible, ou de filtrer les requêtes transmises au module 150. Ce module peut être interfacé de différentes manières au sein du moteur de questions-réponses, selon les étapes du traitement de la question.

Par exemple, le module de filtrage peut être configuré pour recevoir directement la question posée avant qu'elle ne soit analysée. Il anonymise toute donnée sensible présente dans la question, comme les noms d'entités spécifiques ou les informations sensibles de la base de connaissances.

Par exemple, le module de filtrage peut être configuré pour recevoir les éléments de la question identifiés par l'analyseur de question. Il filtre ou anonymise des mots-clés jugés confidentiels avant de les transmettre au module d'identification.

Par exemple, le module de filtrage peut être configuré pour recevoir les intitulés et/ou les attributs des entités identifiées par le module d'identification ou par le module de mobilisation. Il filtre ou anonymise ces intitulés et/ou attributs avant de les transmettre au générateur de requête.

Par exemple, le module de filtrage peut être configuré pour recevoir la requête générée par le générateur de requête et contenant des intitulés et/ou des attributs d'entités. Il filtre ou anonymise ces intitulés et/ou attributs avant de les transmettre au module mettant en œuvre le modèle de langage naturel.

Lorsque l'anonymisation d'intitulés ou d'attributs d'entités est réversible, un module de désanonymisation peut être prévu pour recevoir la réponse fournie par le module mettant en œuvre le modèle de langage naturel et traiter cette réponse en désanonymisant les intitulés ou attributs anonymisés qu'elle contient avant de fournir la réponse traitée au module de restitution.

La Figure 2 illustre un exemple d'interface utilisateur pour un système de questions-réponses basé sur un graphe de connaissances. L'interface utilisateur peut être mise en œuvre par une variété de dispositifs tels que des ordinateurs, des tablettes, des smartphones ou des assistants vocaux. En fonction du dispositif utilisé, l'interface peut varier pour s'adapter aux contraintes et possibilités de chaque support. Sur un ordinateur de bureau, l'interface utilisateur peut inclure des éléments graphiques détaillés, des visualisations interactives de graphes, et des options de navigation avancées comme le zoom, le panoramique, et la rotation. Des options de personnalisation sont aussi possibles, comme le réglage des couleurs ou de la taille des éléments affichés pour optimiser l'expérience utilisateur. Sur un smartphone ou une tablette, les éléments de l'interface peuvent être simplifiés pour s'adapter aux contraintes de taille d'écran. Par exemple, la visualisation du graphe de connaissances peut inclure un zoom tactile, permettant à l'utilisateur d'explorer facilement des sections spécifiques du graphe. Une barre de défilement ou des icônes de zoom (« + » et « - ») peuvent également être ajoutées. Pour une interaction vocale, l'interface utilisateur guide l'utilisateur avec des instructions audio et fournit des réponses sous forme de synthèse vocale. Les informations du graphe de connaissances peuvent être restituées sous forme de descriptions narratives pour faciliter la compréhension sans affichage graphique.

L'interface utilisateur comprend le module de saisie 1 et le module de restitution 2.

Le module de saisie 1 est conçu pour permettre à l'utilisateur de poser des questions en langage naturel. Le module de saisie peut permettre divers modes de saisie, comme une zone de texte dans lequel l'utilisateur peut librement saisir une question et/ou un champ de saisie vocal, permettant d'utiliser la reconnaissance vocale pour transcrire la question parlée en texte. Dans ce cas, l'utilisateur peut par exemple appuyer sur une icône de micro pour démarrer et arrêter l'enregistrement vocal. Selon un exemple de mode de saisie, une zone d'import de fichier peut être prévue. L'utilisateur peut faire glisser un fichier vers une telle zone, le fichier pouvant contenir des informations complémentaires. Le système peut alors extraire des informations pertinentes du fichier pour enrichir la compréhension de la question.

Le module de saisie peut inclure des options pour modifier ou spécifier des paramètres de la question. Par exemple, il peut être prévu une commande de sélection d'un domaine de recherche (par exemple « télécommunications », « santé », ...) dans le graphe de connaissances. Par exemple, il peut être prévu une commande de sélection d'un niveau de détail souhaité dans la réponse (par exemple « concise » ou « détaillée ») avant la finalisation de la saisie de la question.

Le module de restitution 2 est subdivisé en plusieurs sections :
une section 21 de restitution de la question saisie,
une section 22 de restitution d'une liste d'entités mobilisées dans la génération de la réponse à la question saisie,
une section 23 de restitution d'une réponse à la question saisie, et
une section 24 de restitution d'une portion du graphe de connaissance associée aux entités de la liste d'entités.

Le module de restitution peut permettre divers modes de restitution adaptés aux caractéristiques et/ou contraintes du ou des dispositifs utilisés et/ou aux préférences et/ou besoins de l'utilisateur. Par exemple, le mode de restitution peut varier selon que l'utilisateur souhaite une réponse synthétique ou détaillée. Par exemple, le mode de restitution peut être sous forme textuelle, graphique et/ou vocale. Le module peut proposer des filtres, des options de formatage, des commandes de navigation contextuelle, par exemple des boutons de navigation entre les sections et/ou au sein d'une section et/ou des raccourcis permettant d'alterner entre les différents niveaux de détail souhaités dans la réponse, etc.

La section 21 est configurée pour restituer la question saisie par l'utilisateur. Cette fonctionnalité permet de rappeler le contexte de la réponse en montrant la formulation exacte utilisée pour générer la réponse. En fonction des implémentations, cette section peut également inclure une fonctionnalité d'édition rapide, permettant à l'utilisateur de reformuler ou d'affiner sa question sans quitter l'interface utilisateur. Par exemple, il peut être prévu que le fait de cliquer sur la question affichée ouvre un champ de texte éditable contenant l'intitulé de la question, permettant ainsi à l'utilisateur de modifier la question directement. Un bouton « Reformuler » peut être également prévu, l'interaction avec ce bouton entraînant la proposition par le système de questions-réponses de versions alternatives de la question.

La section 23 est configurée pour restituer la réponse à la question posée. La réponse peut être générée dynamiquement par un moteur de questions-réponses utilisant un ou des modèles de traitement de langage naturel, comme un modèle de langage de grande taille (en anglais « large language model », LLM), comme par exemple le moteur du système de questions-réponses illustré par la Figure 1. La restitution de la réponse peut par exemple se faire de manière progressive en streaming, affichant les informations au fur et à mesure qu'elles sont générées, permettant à l'utilisateur de voir la réponse se construire en temps réel. Cette fonctionnalité peut s'accompagner d'une animation de chargement pour signaler que la génération de la réponse est en cours. Des boutons interactifs peuvent être prévus, comme par exemple un bouton "étendre la réponse", une interaction avec un tel bouton occasionnant la génération d'un complément de réponse apportant des précisions supplémentaires basées sur des concepts connexes.

La section 22 est configurée pour restituer une liste comprenant la ou les entités qui ont été mobilisées par le système de questions-réponses pour générer la réponse. Chaque entité peut être représentée par un intitulé 31 et un lien 32, par exemple un hyperlien, vers une page détaillée. Les représentations des entités restituées peuvent par exemple être organisées dans une liste ordonnée ou dans une grille. Des filtres peuvent être intégrés pour permettre de trier les représentations des entités restituées par catégorie.

Les intitulés 31 permettent de facilement identifier chaque entité mobilisée. Les liens 32 redirigent vers des pages individuelles où l'utilisateur peut explorer des informations approfondies sur chaque entité. Par exemple, dans un cas d'usage d'une entreprise, si une entité est un concept technologique ou un projet spécifique, le lien peut diriger l'utilisateur vers une ou plusieurs pages internes documentant ce concept ou projet. Ce niveau de détail permet d'approfondir la compréhension de la réponse et de naviguer vers des informations additionnelles pertinentes.

Dans certaines réalisations, une première interaction avec un lien 32 peut entraîner l'affichage d'un aperçu de tout ou partie de la page détaillée de l'entité, et une deuxième interaction avec le même lien 32 ou avec l'aperçu peut entraîner l'affichage de la page détaillée dans son intégralité.

En complément, dans la section 23, certaines parties de la réponse peuvent être interactives, par exemple des parties de la réponse faisant explicitement référence à une des entités mobilisées ou à une relation entre une telle entité mobilisée et un élément de son voisinage dans le graphe. Par exemple, il peut être prévu que la réponse contienne un intitulé 31 interactif d'une entité représentée dans la section 22 et qu'interagir avec l'intitulé 31 dans la section 22 ou dans la section 23 occasionne l'ouverture de la page descriptive de l'entité.

La section 24 est configurée pour restituer une portion du graphe de connaissances, focalisée sur les entités mobilisées 41 et leur voisinage 42. Cette représentation, par exemple graphique, inclut des nœuds pour les entités et des arcs représentant les relations 43 entre ces entités.

Plusieurs types d'interactions peuvent être prévus avec la section 24, permettant une manipulation aisée du graphe et une exploration enrichie des relations entre les entités. Les interactions peuvent inclure :
une interaction avec un nœud,
une interaction avec une relation,
une interaction globale avec plusieurs nœuds, par exemple tous les nœuds et/ou plusieurs relations, par exemple toutes les relations,
une interaction avec l'ensemble de la portion de graphe et/ou avec la section 24 dans son ensemble.

Différents types d'actions peuvent être effectués en fonction de l'élément concerné.

Une interaction avec un nœud peut appliquer divers effets, par exemple :
centrer la portion de graphe sur le nœud,
changer une couleur du nœud,
masquer le nœud,
afficher ou masquer l'intitulé du nœud,
ouvrir ou fermer une page de l'entité associée au nœud,
afficher ou masquer un aperçu de la page de l'entité associée au nœud,
ajuster la position du nœud sur la portion de graphe, et/ou
modifier la taille du nœud, etc.

Une interaction avec une relation peut appliquer divers effets, par exemple :
masquer la relation,
changer une couleur de la relation,
mettre en surbrillance la relation, et/ou
afficher ou masquer une description de la relation, etc.

Une interaction avec un nœud ou une relation peut par exemple appliquer un même effet à tous les nœuds ou à tous les nœuds de même type que le nœud concerné ou un même effet à toutes les relations ou à toutes les relations de même type que la relation concernée.

Une interaction avec un nœud peut par exemple appliquer un même effet à toutes les relations de ce nœud avec son voisinage.

Une interaction avec une relation peut par exemple appliquer un même effet aux nœuds liés par cette relation.

Une navigation interactive peut être prévue en permettant à l'utilisateur d'interagir avec les nœuds pour explorer davantage les entités associées ou voir des détails spécifiques. Par exemple, des fonctionnalités de zoom et de navigation peuvent être prévues en permettant à l'utilisateur d'ajuster la taille et l'emplacement de la portion du graphe de connaissances restituée pour explorer des sections spécifiques du graphe. Une telle fonctionnalité est particulièrement utile dans des graphes denses ou larges. Cette fonctionnalité peut être offerte par exemple au moyen de boutons « + » et « - », d'une barre de défilement, ou encore au moyen de commandes tactiles telles que maintenir deux doigts sur une partie du graphe et les écarter pour effectuer un zoom avant ou les rapprocher pour effectuer un zoom arrière.

Des filtres peuvent être prévus pour permettre à l'utilisateur de filtrer les types des relations représentées, comme les relations hiérarchiques ou fonctionnelles entre les entités. Des couleurs différentes peuvent être utilisées pour indiquer les types des relations représentés. La taille des nœuds peut être ajustable. Un curseur de niveau de profondeur du voisinage affiché, permettant d'afficher des entités connexes sur plusieurs niveaux de relation (également appelé profondeur, ou degré de voisinage), peut être prévu pour permettre de fournir à l'utilisateur une vue contextuelle plus ou moins étendue. La portion de graphe peut être affichée en différentes couches de connexion, en montrant uniquement les relations primaires, c'est-à-dire avec un degré de voisinage de 1, dans une vue initiale, et des couches de connexion supplémentaires montrant des relations secondaires, tertiaires, etc. dans des vues suivantes.

Des interactions entre la section 24 et d'autres sections de l'interface peuvent être prévues.

Par exemple, une interaction avec une entité particulière depuis la section 22 ou la section 23 peut appliquer un effet (par exemple une mise en surbrillance) au nœud correspondant à cette entité dans la section 24 et/ou aux arcs correspondant aux relations de ce nœud avec son voisinage.

Dans certaines réalisations, l'utilisateur peut cliquer et glisser un élément d'une section de l'interface utilisateur vers une autre section de l'interface utilisateur.

Par exemple, un intitulé d'une entité, apparaissant dans la section 23, peut être ainsi déplacé vers la section de restitution du graphe 24 pour l'ajouter ou l'isoler dans le graphe, ce qui peut par exemple permettre d'ajuster la portion de graphe restituée pour focaliser sur cette entité et son voisinage immédiat. Par exemple, il peut être prévu qu'en cliquant sur l'intitulé d'une entité dans la section 22 ou 23, l'entité correspondante soit mise en évidence dans la section 24.

Il est à présent fait référence à la Figure 3, qui illustre l'interface 5 d'une page dédiée à une entité spécifique dans le système de questions-réponses. Cette interface permet à l'utilisateur d'explorer et de modifier les informations associées à une entité, avec une structure de présentation et des fonctionnalités pouvant par exemple être similaires à celles d'une page typique de Wikibase.

L'interface de la Figure 3 comprend l'intitulé 51 de l'entité en partie haute de la page et un ou plusieurs attributs 52, 53.

Par exemple, les attributs peuvent comprendre un ou plusieurs des éléments suivants :
au moins une propriété de la page (par exemple une date de création, un statut, un auteur, etc...),
au moins un alias de l'entité dans au moins une langue,
au moins une propriété 52 décrivant l'entité,
au moins une relation avec une entité voisine dans le graphe de connaissances,
au moins une propriété d'une telle relation (par exemple un type de la relation),
au moins une source 53 de connaissance ou référence relative à au moins un des autres attributs, par exemple sous forme de lien ou d'hyperlien vers une page détaillant un contenu de la source de connaissance ou référence.

L'interface peut comprendre des éléments interactifs 54, par exemple un bouton pour créer une nouvelle page d'entité, ainsi qu'un ou plusieurs boutons d'édition pour modifier l'intitulé d'une page et pour ajouter, modifier ou supprimer des attributs dans une page.

### Application industrielle

Les présentes solutions techniques peuvent être mises en œuvre dans divers contextes industriels, notamment pour une utilisation interne au sein d'une organisation, afin de faciliter l'accès, la gestion et l'exploration de connaissances techniques, stratégiques ou organisationnelles.

Quelques exemples d'applications illustratives au sein d'une organisation sont présentés ci-après.

Les présentes solutions techniques peuvent être déployées pour offrir aux collaborateurs un accès interactif et centralisé à des informations critiques, telles que les projets en cours, les technologies utilisées, ou les standards adoptés. L'utilisation d'une interface intuitive basée sur un graphe de connaissances permet une navigation contextuelle, simplifiant ainsi la recherche d'informations complexes.

Les présentes solutions techniques peuvent être déployées pour consolider et visualiser les projets stratégiques, leurs interdépendances, les équipes impliquées, les contacts clés et les livrables associés. Une telle vision globale favorise une prise de décision éclairée et améliore le suivi des initiatives prioritaires.

Les présentes solutions techniques peuvent être déployées lorsque les informations relatives aux équipes, à leurs compétences et à leurs réalisations sont centralisées afin de faciliter l'identification d'experts internes, encourager la collaboration inter-équipes et renforcer les synergies organisationnelles.

Les présentes solutions techniques peuvent être déployées pour aider les équipes commerciales et de support à accéder rapidement à des données pertinentes sur les produits, services ou projets réalisés pour des clients spécifiques. Une telle réactivité améliore la personnalisation des interactions et la satisfaction client.

Les présentes solutions techniques peuvent être déployées pour simplifier l'intégration des nouveaux employés et la formation des équipes en leur offrant un accès clair aux bases de connaissances internes. Cela permet d'explorer les relations entre les concepts, outils et procédures de l'organisation, réduisant ainsi les délais d'adaptation.

Quelques autres exemples d'applications illustratives, non nécessairement conditionnées à un usage au sein d'une organisation, sont présentées ci-après.

Les présentes solutions techniques peuvent être utilisées pour naviguer dans des bases de connaissances complexes et explorer les relations entre concepts, publications, auteurs ou données expérimentales. Elles favorisent ainsi une compréhension approfondie et un enrichissement des connaissances.

Ces techniques peuvent être appliquées pour aider des professionnels de santé à accéder rapidement à des informations actualisées sur les traitements, les interactions médicamenteuses, ou les protocoles de soins, tout en garantissant la transparence des sources.

Ces techniques peuvent être utilisées pour organiser et naviguer dans des données publiques complexes, comme les infrastructures, les politiques publiques ou les initiatives locales, afin de faciliter la transparence et la prise de décision.

Ces techniques peuvent être utilisées pour permettre aux enseignants et apprenants d'explorer des bases de connaissances éducatives, en favorisant des expériences d'apprentissage dynamiques et personnalisées.

La présente divulgation ne se limite pas aux exemples décrits ci-avant, seulement à titre d'exemple, mais elle englobe toutes les variantes que peut envisager l'homme de l'art dans le cadre de la protection recherchée.

## Revendications

1. Procédé de restitution d'une réponse à une question en langage naturel par un système de questions-réponses, le procédé étant mis en œuvre par une interface utilisateur et comprenant :
une restitution d'une réponse à une question saisie en langage naturel, la réponse étant générée par un moteur de questions-réponses utilisant un modèle de traitement de langage naturel,
une restitution d'une représentation d'entités mobilisées par le système lors de la génération de la réponse, et
une restitution d'une représentation d'une portion d'un graphe de connaissances comprenant les entités mobilisées et leur voisinage.

2. Procédé selon la revendication 1, dans laquelle le module de restitution est configuré pour restituer la réponse de manière progressive au fur et à mesure de sa génération par le moteur de questions-réponses.

3. Procédé selon l'une des revendications précédentes, dans laquelle la représentation des entités mobilisées comprend des liens interactifs menant à des pages détaillant des informations associées aux entités.

4. Procédé selon l'une des revendications précédentes, dans laquelle la représentation de la portion du graphe de connaissances comprend des liens interactifs menant à des pages détaillant des informations associées aux entités et à leur voisinage.

5. Procédé selon la revendication 3 ou 4, dans laquelle les pages comprennent des indications de sources des informations.

6. Procédé selon l'une des revendications 3 à 5, comprenant un module d'édition des informations depuis les pages.

7. Procédé selon l'une des revendications précédentes, dans laquelle la représentation des entités inclut des labels descriptifs et/ou des descriptions textuelles des entités.

8. Système de questions-réponses comprenant une interface utilisateur comprenant :
un module de saisie de questions en langage naturel et
un module de restitution configuré pour restituer :
une réponse générée par un moteur de questions-réponses utilisant un modèle de traitement de langage naturel,
une représentation d'entités mobilisées par le système lors de la génération de la réponse, et
une représentation d'une portion d'un graphe de connaissances comprenant les entités mobilisées et leur voisinage.

9. Programme d'ordinateur comprenant des instructions qui, lorsque le programme est mis en oeuvre par un processeur, conduisent à mettre en œuvre le procédé selon l'une des revendications 1 à 7.

10. Support d'enregistrement non transitoire, lisible par un ordinateur, sur lequel est enregistré un programme d'ordinateur selon la revendication précédente.
